# EUROPÄISCHE PATENTSCHRIFT

(11) **EP 0 647 337 B1**
(45) Veröffentlichungstag und Bekanntmachung des Hinweises auf die Patenterteilung: **04.09.1996**
(21) Anmeldenummer: 93900009.7
(22) Anmeldetag: 29.05.1992
(51) Int. Cl.: G05D 23/13, F16K 11/074

(54) **SANITÄRE MISCHBATTERIE MIT THERMOSTATSTEUERUNG**
SANITARY MIXER TAP WITH THERMOSTAT CONTROL
ROBINET MITIGEUR SANITAIRE A REGULATION THERMOSTATIQUE

(30) Priorität: 05.06.1991 DE 4118477; 18.06.1991 DE 4120024
(43) Veröffentlichungstag der Anmeldung: 12.04.1995
(73) Patentinhaber: IDEAL-STANDARD GMBH, D-53008 Bonn (DE)
(72) Erfinder: SCHNEIDER, Herman-Josef, D-5502 Schweich-Issel (DE)
(74) Vertreter: Gesthuysen, Hans Dieter, Dipl.-Ing.
(86) Internationale Anmeldenummer: EP9201201
(87) Internationale Veröffentlichungsnummer: WO9222862

(56) Entgegenhaltungen:
- EP-A- 0 156 122
- WO-A-91/05968
- DE-A- 3 800 305
- FR-A- 2 067 762
- FR-A- 2 397 579
- US-A- 4 738 393

## Beschreibung

Die Erfindung betrifft eine sanitäre Mischbatterie mit Thermostatregelung, mit einem Kaltwasserzulauf, einem Warmwasserzulauf und einem Mischwasserauslauf, mit einer feststehenden Ventilsitzscheibe, mit einer auf der Ventilsitzscheibe zur Mengensteuerung verschiebbaren Ventilscheibe, mit einem mit der Ventilscheibe zur Temperatursteuerung und -regelung zusammenwirkenden Temperatursteuer- und -regelblock, mit einem in dem Temperatursteuer-und -regelblock vorgesehenen Steuer- und Regelkolben, mit einem mit dem Steuer- und Regelkolben zusammenwirkenden temperaturabhängigen Regelelement, mit einem Betätigungshebel und mit einem mit dem Betätigungshebel verbundenen Steuerhebel, wobei die Ventilsitzscheibe eine mit dem Kaltwasserzulauf in Verbindung stehende Kaltwassereinlauföffnung und eine mit dem Warmwasserzulauf in Verbindung stehende Warmwassereinlauföffnung aufweist sowie die Ventilscheibe mit der Kaltwassereinlauföffnung der Ventilsitzscheibe und der Warmwassereinlauföffnung der Ventilsitzscheibe kommunizierende Durchtrittsöffnungen aufweist, wobei der Temperatursteuer- und -regelblock mit den Durchtrittsöffnungen der Ventilscheibe kommunizierende Kalt- und Warmwassereintrittsöffnungen sowie einen Kaltwasserringraum und einen Warmwasserringraum aufweist und wobei der Steuer- und Regelkolben zur Temperatursteuerung relativ zum Temperatursteuer- und -regelblock in eine temperaturbestimmende Ausgangslage einstellbar und zur Temperaturregelung mittels des Regelelements steuerbar ist.

Zum Stand der Technik, von dem die Erfindung ausgeht, gehört zunächst eine sanitäre Mischbatterie mit Thermostatregelung der zuvor grundsätzlich beschriebenen Art, bei der in dem Temperatursteuer- und -regelblock eine Steuer- und Regelscheibe vorgesehen ist (vgl. die DE-PS 35 25 052). Dabei ist auch bereits daran gedacht worden, statt einer Steuer- und Regelscheibe einen Steuer- und Regelkolben vorzusehen (vgl. Patentanspruch 34 der DE-PS 35 25 052), ohne daß im Detail angegeben ist, wie die Ausführung mit einem Steuer- und Regelkolben aussehen könnte.

Die sanitäre Mischbatterie mit Thermostatregelung, von der die Erfindung ausgeht, bei der also statt einer Steuer- und Regelscheibe ein Steuer- und Regelkolben vorgesehen ist, gibt es nur auf dem Papier (vgl. die US-PS 4,738,393, insbesondere Fig. 6 bis 10 und die zugehörige Beschreibung). Tatsächlich wird nämlich die konstruktive Ausgestaltung dieser bekannten sanitären Mischbatterie sowohl in bezug auf die Fertigung als auch in bezug auf die Funktion den Anforderungen nicht gerecht, die an ein qualitativ hochwertiges Serienprodukt, wie dies eine sanitäre Mischbatterie darstellt, zu stellen sind und gestellt werden.

Der Erfindung liegt nun die Aufgabe zugrunde, die bekannte sanitäre Mischbatterie, von der die Erfindung ausgeht, bei der also dem Temperatursteuer- und -regelblock ein Steuer- und Regelkolben zugeordnet ist, konstruktiv so auszugestalten und weiterzubilden, daß sowohl in bezug auf die Fertigung als auch in bezug auf die Funktion höchsten Anforderungen entsprochen werden kann, d. h. insbesondere, daß mit relativ geringem Material- und Fertigungsaufwand eine über lange Zeit wartungsfrei funktionstüchtige sanitäre Mischbatterie hergestellt und zur Verfügung gestellt werden kann.

Die erfindungsgemäße, mit relativ geringem Material- und Fertigungsaufwand herstellbare, über lange Zeit wartungsfrei funktionstüchtige sanitäre Mischbatterie ist nun zunächst und im wesentlichen dadurch gekennzeichnet, daß der Temperatursteuer- und -regelblock zwischen dem Kaltwasserringraum und dem Warmwasserringraum einen Steuer- und Anschlagbund aufweist, der Steuer-und Regelkolben hülsenförmig ausgeführt sowie eine Kaltwassersteuerkante und - mit Abstand zu der Kaltwassersteuerkante - eine Warmwassersteuerkante aufweist und der Steuer- und Anschlagbund eine Breite hat, die geringer ist als der Abstand zwischen der Kaltwassersteuerkante und der Warmwassersteuerkante, und in den Zwischenraum zwischen der Kaltwassersteuerkante und der Warmwassersteuerkante ragt.

Erfindungsgemäß ist zunächst die Tatsache ausgenutzt worden, daß bei einer sanitären Mischbatterie der hier in Rede stehenden Art, also einer sanitären Mischbatterie mit Mengensteuerung einerseits sowie Temperatursteuerung und -regelung andererseits nur zwischen der Ventilscheibe und der Ventilsitzscheibe eine Abdichtung im eigentlichen Sinn erreicht werden muß. Bei der erfindungsgemäßen sanitären Mischbatterie haben folglich der Steuer- und Anschlagbund des Temperatursteuer- und -regelblocks und die damit zusammenwirkenden Steuerkanten des Steuer- und Regelkolbens - Kaltwassersteuerkante und Warmwassersteuerkante - nicht die Aufgabe, eine Abdichtung im eigentlichen Sinn zu erreichen. Vielmehr wird mit Hilfe der durch den Abstand zwischen Kaltwassersteuerkante und Steuer- und Anschlagbund einerseits sowie zwischen Warmwassersteuerkante und Steuer- und Anschlagbund andererseits vorgegebenen Strömungsquerschnitte das Verhältnis von durchströmendem Kaltwasser zu durchströmendem Warmwasser und damit die Temperatur des Mischwassers gesteuert.

Für eine sanitäre Mischbatterie mit Thermostatregelung ist wesentlich, daß auch relativ geringe Temperaturschwankungen relativ schnell ausgeregelt werden. Die Lehre der Erfindung führt ersichtlich dazu, daß zur temperaturregelnden Verschiebung des Steuer- und Regelkolbens relativ zum Temperatursteuer- und -regelblock nur besonders geringe Temperaturregelkräfte erforderlich sind, die von dem temperaturabhängigen Regelelement auch bereits bei geringen Temperaturabweichungen erzeugt werden. Tatsächlich ist ja bei der erfindungsgemäßensanitären Mischbatterie während der temperaturregelnden Verschiebung des Steuer- und Regelkolbens eine relativ hohe Abdichtungskräfte erfordernde hundertprozentige Abdichtung überhaupt nicht erforderlich und folglich auch nicht gegeben.

Es gibt nun verschiedene Möglichkeiten, die erfindungsgemäße sanitäre Mischbatterie auszugestalten und weiterzubilden.

Zur erfindungsgemäßen sanitären Mischbatterie gehört, daß der Steuer- und Anschlagbund des Temperatursteuer- und -regelblocks in den Zwischenraum zwischen den Steuerkanten des Steuer- und Regelkolbens - Kaltwassersteuerkante und Warmwassersteuerkante - ragt. Damit nun die Montage der erfindungsgemäßen sanitären Mischbatterie problemlos möglich ist, ist eine bevorzugte Ausführungsform der erfindungsgemäßen sanitären Mischbatterie dadurch gekennzeichnet, daß der Steuer- und Regelkolben aus einem ersten Kolbenteil und einem zweiten Kolbenteil besteht. Das gibt die Möglichkeit, das erste Kolbenteil von der einen Seite des Steuer- und Anschlagbundes in den Temperatursteuer- und -regelblock und das zweite Kolbenteil von der anderen Seite des Steuer- und Anschlagbundes in den Temperatursteuer- und -regelblock einzuführen - und dann die beiden Kolbenteile, wie auch immer, miteinander zu verbinden.

Zur erfindungsgemäßen sanitären Mischbatterie gehört auch, daß der Steuer-und Regelkolben hülsenförmig ausgeführt ist. Eine diese grundsätzliche Aussage in besonderer Weise nutzende Ausführungsform der erfindungsgemäßen sanitären Mischbatterie ist nun dadurch gekennzeichnet, daß der Steuer- und Regelkolben mindestens eine in Abhängigkeit von der Stellung des Steuer-und Regelkolbens relativ zum Temperatursteuer- und -regelblock mit dem Kaltwasserringraum und/oder mit dem Warmwasserringraum kommunizierende, in den Innenraum des Steuer- und Regelkolbens mündende Durchtrittsöffnung aufweist. Bei dieser bevorzugten Ausführungsform der erfindungsgemäßen sanitären Mischbatterie wird also das kalte Wasser und/oder das warme Wasser über die im Temperatursteuer- und -regelblock vorhandenen Ringräume - Kaltwasserringraum und Warmwasserringraum - in den Innenraum des hülsenförmigen Steuer- und Regelkolbens geführt, von wo es dann zum Mischwasserauslauf gelangt.

Bei der zuletzt beschriebenen bevorzugten Ausführungsform einer erfindungsgemäßen sanitären Mischbatterie, bei der also das Wasser in den Innenraum des hülsenförmigen Steuer- und Regelkolbens fließt und von dort zum Mischwasserauslauf gelangt, empfiehlt es sich, einerseits im Innenraum des Steuer- und Regelkolbens mindestens eine vorzugsweise an der Innenwand anliegende Siebhülse vorzusehen, andererseits das Regelelement zumindest teilweise innerhalb des Steuer- und Regelkolbens, also im wasserdurchströmten Innenraum anzuordnen. Das Vorsehen einer Siebhülse im Innenraum des Steuer- und Regelkolbens führt einerseits zu einer guten Vermischung des kalten Wassers und des warmen Wassers, andererseits zu einer - bei sanitären Mischarmaturen immer erwünschten - Geräuschreduzierung. Die Anordnung des Regelelements zumindest teilweise innerhalb des Steuer- und Regelkolbens, also im wasserdurchströmten Innenraum des Steuer- und Regelkolbens bringt den Vorteil, daß das temperaturabhängige Regelelement so früh als möglich auf Temperaturabweichungen anspricht - und diese folglich relativ schnell ausregelt.

Eine bevorzugte Ausführungsform der erfindungsgemäßen sanitären Mischbatterie ist nun weiter dadurch gekennzeichnet, daß eine den Temperatursteuer-und -regelblock übergreifende Steuerhülse vorgesehen ist sowie der Steuer-und Regelkolben und das Regelelement in der Steuerhülse eingespannt sind. Dabei kommt einer weitergehenden Maßnahme besondere Bedeutung zu, nämlich der Maßnahme, in Achsrichtung des Steuer- und Regelkolbens, diesen vorzugsweise zumindest teilweise koaxial umgebend, eine Restwegeinheit vorzusehen, die eine federbelastete Bewegung des Regelelements relativ zur Steuerhülse zuläßt und verhindert, daß bei einer schnellen, insbesondere bei einer ruckartigen Bewegung des Betätigungshebels von Warm- nach Kaltstellung der Steuer-und Anschlagbund des Temperatursteuer- und -regelblocks und die entsprechende Steuerkante des Steuer- und Regelkolbens, nämlich die Warmwassersteuerkante, und/oder die Betätigungsmechanik beschädigt werden.

In bezug auf weitere Möglichkeiten, die erfindungsemäße sanitäre Mischbatterie auszugestalten und weiterzubilden, wird zunächst auf die dem Patentanspruch 1 nachgeordneten Patentansprüche verwiesen. Im übrigen werden im folgenden die Erfindung sowie Ausgestaltungen und Weiterbildungen der Erfindung anhand einer lediglich Ausführungsbeispiele darstellenden Zeichnung weiter erläutert; es zeigt
- Fig. 1: einen Längsschnitt durch die wichtigsten Funktionsteile einer ersten Ausführungsform einer erfindungsgemäßen sanitären Mischbatterie mit Thermostatsteuerung,
- Fig. 2: einen Längsschnitt durch wesentliche Funktionsteile einer zweiten Ausführungsform einer erfindungsgemäßen sanitären Mischbatterie mit Thermostatsteuerung und

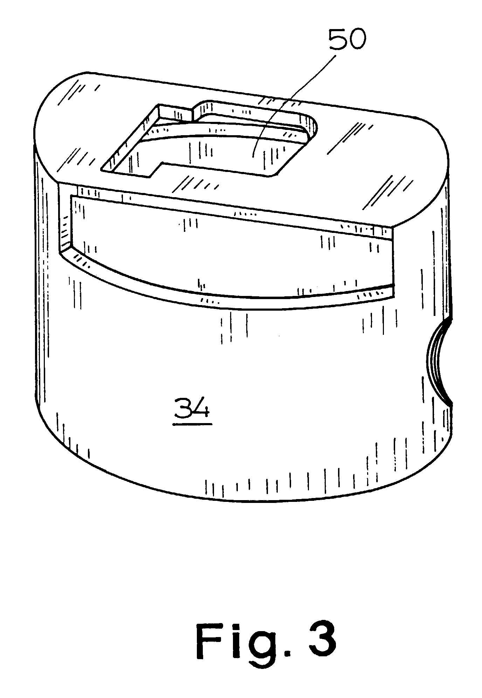

- Fig. 3: in perspektivischer Darstellung die Steuerhülse der in den Fig. 1 und 2 dargestellten sanitären Mischbatterien mit Thermostatsteuerung.

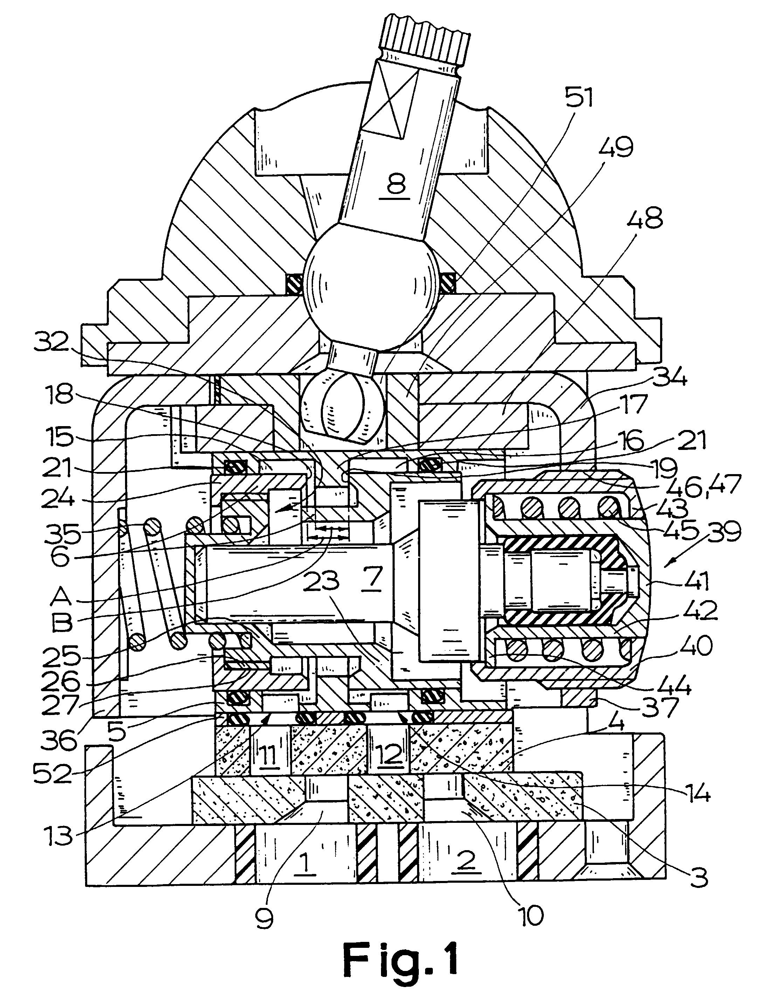

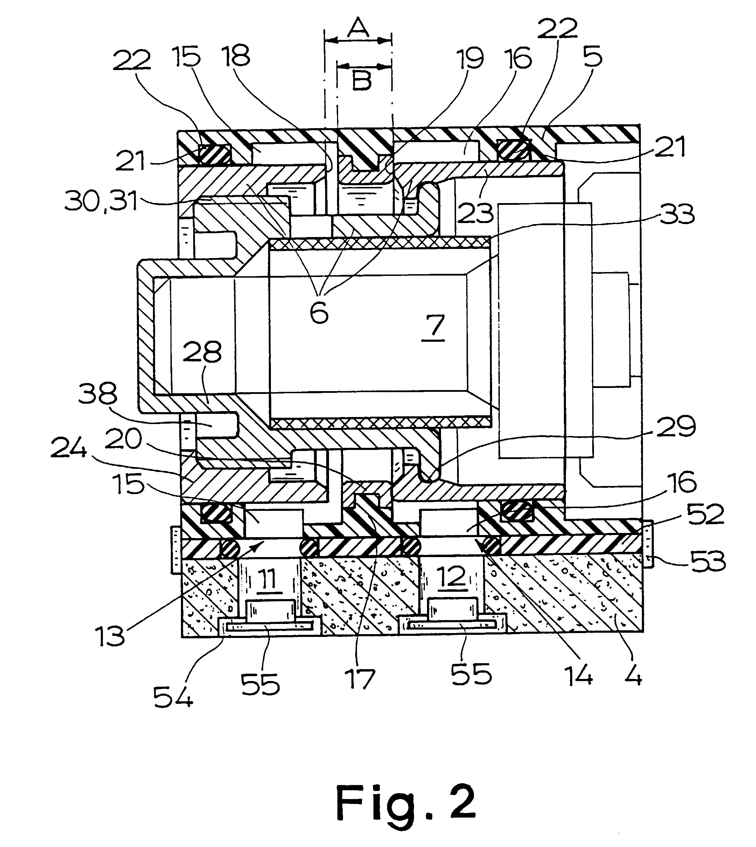

Die in den Fig. 1 und 2 nur teilweise dargestellte sanitäre Mischbatterie ist ein sogenannter Einzelthermostat, d. h. daß die Mengensteuerung einerseits und die Temperatursteuerung und -regelung andererseits an der Verbrauchsstelle erfolgen.

Zu den in den Fig. 1 und 2 nur teilweise dargestellten sanitären Mischbatterien mit Thermostatregelung gehören zunächst ein Kaltwasserzulauf 1, ein Warmwasserzulauf 2 und ein nicht dargestellter Mischwasserauslauf. In Strömungsrichtung gesehen folgt dem Kaltwasserzulauf 1 und dem Warmwasserzulauf 2 eine feststehende Ventilsitzscheibe 3, eine auf der Ventilsitzscheibe 3 zur Mengensteuerung verschiebbare Ventilscheibe 4 und ein mit der Ventilscheibe 4 zur Temperatursteuerung und -regelung zusammenwirkender Temperatursteuer- und -regelblock 5. Ferner gehören zu der erfindungsgemäßen sanitären Mischbatterie ein in dem Temperatursteuer- und -regelblock 5 vorgesehener Steuer- und Regelkolben 6, ein mit dem Steuer- und Regelkolben 6 zusammenwirkendes temperaturabhängiges Regelelement 7, ein nicht dargestellter Betätigungshebel und ein mit dem nicht dargestellten Betätigungshebel verbundener Steuerhebel 8.

Wie nur die Fig. 1 zeigt, weist die Ventilsitzscheibe 3 eine mit dem Kaltwasserzulauf 1 in Verbindung stehende Kaltwassereinlauföffnung 9 und eine mit dem Warmwasserzulauf 2 in Verbindung stehende Warmwassereinlauföffnung 10 auf. In der Ventilscheibe 4 sind, wie die Fig. 1 und 2 zeigen, mit der Kaltwassereinlauföffnung 9 der Ventilsitzscheibe 3 und der Warmwassereinlauföffnung 10 der Ventilsitzscheibe 3 kommunizierende Durchtrittsöffnungen 11, 12 verwirklicht. Der Temperatursteuer- und -regelblock 5 weist mit den Druch-trittsöffnungen 11, 12 der Ventilscheibe 4 kommunizierende Kalt- und Warm-wassereintrittsöffnungen 13, 14 sowie einen Kaltwasserringraum 15 und einen Warmwasserringraum 16 auf. Der Steuer- und Regelkolben 6 ist zur Temperatursteuerung relativ zum Temperatursteuer- und -regelblock 5 in eine temperaturbestimmende Ausgangslage einstellbar und zur Temperaturregelung mittels des Regelelements 7 steuerbar.

Wie nun die Fig. 1 und 2 zeigen, gilt für die erfindungsgemäße sanitäre Mischbatterie, daß der Temperatursteuer- und -regelblock 5 - zwischen dem Kaltwasserringraum 15 und dem Warmwasserringraum 16 - einen Steuer- und Anschlagbund 17 aufweist, der Steuer- und Regelkolben 6 hülsenförmig ausgeführt ist sowie eine Kaltwassersteuerkante 18 und - mit Abstand A zu der Kaltwassersteuerkante 18 - eine Warmwassersteuerkante 19 aufweist und der Steuer- und Anschlagbund 17 eine Breite B hat, die geringer ist als der Abstand A zwischen der Kaltwassersteuerkante 18 und der Warmwassersteuerkante 19, und in den Zwischenraum zwischen der Kaltwassersteuerkante 18 und der Warmwassersteuerkante 19 ragt.

Bei der in Fig. 1 dargestellten Ausführungsform einer erfindungsgemäßen sanitären Mischbatterie besteht der Temperatursteuer- und -regelblock 5 aus Kupfer oder aus Messing, vorzugsweise aus Messing. Demgegenüber besteht der Temperatursteuer- und -regelblock 5 bei der in Fig. 2 dargestellten Ausführungsform aus Kunststoff. Dabei ist dann der Steuer- und Anschlagbund 17 mit einer Panzerung 20 aus Kupfer oder aus Messing, vorzugsweise aus Messing, versehen.

Eingangs ist bereits ausgeführt worden, daß bei der erfindungsgemäßen sanitären Mischbatterie während der temperaturregelnden Verschiebung des Steuer-und Regelkolbens 6 eine relativ hohe Abdichtungskräfte erfordernde hundertprozentige Abdichtung nicht erforderlich und folglich auch nicht gegeben ist. Das gibt die Möglichkeit, den dem Steuer- und Regelkolben 6 zugeordneten Innendurchmesser d des Temperatursteuer- und -regelblocks 5 größer, vorzugsweise ca. 0,3 mm größer als den korrespondierenden Außendurchmesser D des Steuer- und Regelkolbens 6 zu wählen. Zur Führung des Steuer- und Regelkolbens 6 im Temperatursteuer- und -regelblock 5 sind bei den dargestellten bevorzugten Ausführungsformen erfindungsgemäßer sanitärer Mischbatterien zwischen dem Temperatursteuer- und -regelblock 5 und dem Steuer- und Regelkolben 6 nur schwach oder unter Umständen sogar nicht vorgespannte 0-Ringe 21 vorgesehen. Dabei sind die 0-Ringe 21 in im Temperatursteuer- und -regelblock 5 verwirklichten Nuten 22 fixiert.

Für die in Fig. 1 dargestellte bevorzugte Ausführungsform einer erfindungsgemäßen sanitären Mischbatterie gilt nun weiter, daß der Steuer- und Regelkolben 6 aus einem ersten Kolbenteil 23 und einem zweiten Kolbenteil 24 besteht. Dabei weist das erste Kolbenteil 23 ein in das zweite Kolbenteil 24 hineinragendes Verbindungsteil 25 mit einem Außengewinde 26 auf, ist das zweite Kolbenteil 24 mit einem Innengewinde 27 versehen und sind die beiden Kolbenteile 23 und 24 miteinander verschraubt. Die beiden Kolbenteile 23, 24 bestehen aus Kupfer oder aus Messing, vorzugsweise aus Messing.

Für die in Fig. 2 dargestellte Ausführungsform einer erfindungsgemäßen sanitären Mischbatterie gilt, daß der Steuer- und Regelkolben 6 aus einem ersten Kolbenteil 23, einem zweiten Kolbenteil 24 und einem die beiden Kolbenteile 23 und 24 verbindenden Adapter 28 besteht. Im einzelnen gilt, daß der Adapter 28 einerseits durch eine Schnappverbindung 29 mit dem ersten Kolbenteil 23 verbunden ist,andererseits ein Außengewinde 30 aufweist und mit dem Außengewinde 30 in das zweite Kolbenteil 24 hineinragt, das zweite Kolbenteil 24 mit einem Innengewinde 31 versehen ist und die beiden Kolbenteile 23 und 24 miteinander verschraubt sind. Bei dieser Ausführungsform bestehen die beiden Kolbenteile 23, 24 aus Kupfer oder aus Messing, vorzugsweise aus Messing, und ist der Adapter 28 in Kunststoff ausgeführt.

Wie zuvor beschrieben, bestehen bei dem in den Fig. 1 und 2 dargestellten Ausführungsformen erfindungsgemäßer sanitärer Mischbatterien die beiden Kolbenteile 23, 24 des Steuer- und Regelkolbens 6 aus Kupfer oder aus Messing, vorzugsweise aus Messing. Denkbar ist jedoch auch eine in den Figuren nicht dargestellte Ausführungsform, bei der der Steuer- und Regelkolben insgesamt aus Kunststoff besteht sowie die Kaltwassersteuerkante und die Warmwassersteuerkante mit einer Panzerung aus Kupfer oder aus Messing, vorzugsweise aus Messing, versehen ist.

Für beide in den Fig. 1 und 2 dargestellte Ausführungsformen erfindungsgemäßer sanitärer Mischarmaturen gilt nun weiter, daß der Steuer- und Regelkolben 6 in Abhängigkeit von der Stellung des Steuer- und Regelkolbens 6 relativ zum Temperatursteuer- und -regeblock 5 mit dem Kaltwasserringraum 15 und/oder dem Warmwasserringraum 16 kommunizierende, in den Innenraum des Steuer- und Regelkolbens 6 mündende Durchtrittsöffnungen 32 aufweist. Dabei kann dann jeweils im Innenraum des Steuer- und Regelkolbens 6 eine vorzugsweise an der Innenwand anliegende, nur in Fig. 2 dargestellte Siebhülse 33 vorgesehen sein und das Regelelement 7 zumindest teilweise innerhalb des Steuer- und Regelkolbens 6, also in dessen Innenraum, angeordnet sein.

Nur in Fig. 1 ist dargestellt, daß eine den Temperatursteuer- und -regelblock 5 übergreifende Steuerhülse 34 vorgesehen ist sowie der Steuer- und Regelkolben 6 und das Regelelement 7 in der Steuerhülse 34 eingespannt sind. Im einzelnen gilt, daß der Steuer- und Regelkolben 6 über eine Rückstellfeder 35 an einem ersten Abstützflansch 36 der Steuerhülse 34 und das Regelelement 7 an einem zweiten Abstützflansch 37 der Steuerhülse 34 abgestützt sind, daß die Rückstellfeder 35 als Schraubendruckfeder ausgeführt ist und daß das der Rückstellfeder 35 zugewandte Ende des Steuer- und Regelkolbens 6 eine das dem Steuer- und Regelkolben 6 zugewandte Ende der Rückstellfeder 35 aufnehmende Ringnut 38 aufweist.

Wiederum zeigt nur die Fig. 1 im einzelnen, daß für die dargestellten Ausführungsformen erfindungsgemäßer sanitärer Mischarmaturen gilt, daß zwischen dem dem zweiten Abstützflansch 37 der Steuerhülse 34 zugewandten Ende des Regelelements 7 und dem zweiten Abstützflansch 37 der Steuerhülse 34 eine Restwegeinheit 39 vorgesehen ist, die eine federbelastete Bewegung des dem zweiten Abstützflansch 37 der Steuerhülse 34 zugewandten Endes des Regelelements 7 relativ zum zweiten Abstützflansch 37 der Steuerhülse 34 zuläßt. Im einzelnen besteht dabei die Restwegeinheit 39 aus einer mit dem zweiten Abstützflansch 37 der Steuerhülse 34 verbundenen Außenhülse 40, einer eine Abstützfläche 41 für das Regelelement 7 aufweisenden Innenhülse 42 und einer zwischen einem Innenbund 43 der Außenhülse 40 und einem Außenbund 44 der Innenhülse 42 vorgesehenen Restwegfeder 45. Dabei weist der zweite Abstützflansch 37 der Steuerhülse 34 eine der Aufnahme der Restwegeinheit 39 dienende Gewindebohrung 46 auf, ist die Außenhülse 40 der Restwegeinheit 39 mit einem Außengewinde 47 versehen und ist die Restwegeinheit 39 mit dem Außengewinde 47 der Außenhülse 40 in die Gewindebohrung 46 des zweiten Abstützflansches 37 der Steuerhülse 34 eingeschraubt.

Vorzugsweise bestehen die Außenhülse 40 und die Innenhülse 42 der zuvor beschriebenen Restwegeinheit 39 aus Kunststoff. Dabei kann dann,wie im einzelnen nicht dargestellt, die Außenhülse der Restwegeinheit mindestens einen nach Innen ragenden Rastvorsprung aufweisen und die Innenhülse mit mindestens einem ihren Außenbund teilenden Federschlitz versehen sein.

Für die in den Fig. 1 und 2 dargestellten Ausführungsformen erfindungsgemäßer sanitärer Mischarmaturen gilt weiter, daß die Steuerhülse 34 einerseits mit dem Temperatursteuer- und -regelblock 5 und andererseits relativ zum Temperatursteuer- und -regelblock 5 verschiebbar ist. Dazu ist der Temperatursteuer- und -regelblock 5 mit einem Steuerkopf 48 versehen, ist in dem Steuerkopf 48 ein Exzenter 49 drehbar gelagert, weist die Steuerhülse 34 eine Steuerausnehmung 50 auf und ist die Steuerhülse 34 durch ein Zusammenwirken von Exzenter 49 und Steuerausnehmung 50 einerseits mit dem Temperatursteuer-und -regelblock 5 und andererseits relativ zum Temperatursteuer- und -regel-block 5 verschiebbar. Der Exzenter 49 weist eine Steuerausnehmung 51 auf, in die der mit dem nicht dargestellten Betätigungshebel verbundene Steuerhebel 8 eingreift.

Schließlich können insbesondere der Fig. 2 noch weitere vorteilhafte Maßnahmen in Verbindung mit der erfindungsgemäßen sanitären Mischbatterie entnommen werden. Zunächst gilt, daß die Ventilscheibe 4 über eine Verbindungsplatte 52 mit dem Temperatursteuer- und -regelblock verbunden ist, wobei die Verbindungsplatte 52 die Ventilscheibe 4 einerseits und den Temperatursteuer- und -regelblock 5 andererseits übergreifende Vorsprünge 53 aufweist. Weiter kann Fig. 2 entnommen werden, daß die in der Ventilscheibe 4 verwirklichten Durchtrittsöffnungen 11, 12 an der der Ventilsitzscheibe 3 zugewandten Seite mit einer Erweiterung 54 versehen sind und daß in den in der Ventilscheibe 4 verwirklichten Durchtrittsöffnungen 11, 12 an der der Ventilsitzscheibe 3 zugewandten Seite jeweils ein Siebeinsatz 55 vorgesehen ist.

In den Figuren nicht dargestellt ist, daß bei erfindungsgemäßen sanitären Mischbatterien die Ventilscheibe und der Temperatursteuer- und -regelblock einstückig ausgeführt sein können, wobei dann die Durchtrittsöffnungen in der Ventilsitzscheibe mit der Kaltwassereintrittsöffnung und der Warmwassereintrittsöffnung im Temperatursteuer- und -regelblock zusammenfallen. Zweckmäßigerweise sind jedoch, wie dies in den Fig. 1 und 2 auch dargestellt ist, die Ventilscheibe 4 einerseits und der Temperatursteuer- und -regelblock5 andererseits als separate Bauteile ausgeführt, weil nur dann die Möglichkeit besteht, die für die beiden Bauteile kosten- und funktionsmäßig optimalen Werkstoffe einzusetzen.

Schließlich ist in den Figuren nicht dargestellt, daß bei erfindungsgemäßen sanitären Mischbatterien der Temperatursteuer- und -regelblock mit dem Steuerkopf und der Verbindungsplatte einstückig ausgeführt sein kann, was kostengünstiger ist als die Realisierung separater Bauteile. Diese einstückige Ausführung kann aus Kupfer oder aus Messing bestehen, besteht vorzugsweise, wiederum aus Kostengründen, jedoch aus Kunststoff.

## Patentansprüche

1. Sanitäre Mischbatterie mit Thermostatsteuerung, mit einem Kaltwasserzulauf (1), einem Marmwasserzulauf (2) und einem Mischwasserzulauf, mit einer feststehenden Ventilsitzscheibe (3), mit einer auf der Ventilsitzscheibe (4) zur Mengensteuerung verschiebbaren Ventilscheibe (4), mit einem mit der Ventilscheibe zur Temperatursteuerung und -regelung zusammenwirkenden Temperatursteuer- und -regelblock (5), mit einem in dem Temperatursteuer- und -regelblock vorgesehenen Steuer- und Regelkolben (6), mit einem mit dem Steuer- und Regelkolben zusammenwirkenden temperaturabhängigen Regelelement (7), mit einem Betätigungshebel und mit einem mit dem Betätigungshebel verbundenen Steuerhebel (8), wobei die Ventilsitzscheibe (3) eine mit dem Kaltwasserzulauf (1) in Verbindung stehende Kaltwassereinlauföffnung (9) und eine mit dem Warmwasserzulauf in Verbindung stehende Marmwassereinlauföffnung (2) aufweist sowie die Ventilscheibe (4) mit der Kaltwassereinlauföffnung (9) der Ventilsitzscheibe und der Warmwassereinlauföffnung (10) der Ventilsitzscheibe (3) kommunizierende Durchtrittsöffnungen (11,12) aufweist, wobei der Temperatursteuer- und -regelblock (5) mit den Durchtrittsöffnunge (11,12) der Ventilscheibe (4) kommunizierende Kalt- und Warmwassereintrittsöffnunge (13,14) sowie einen Kaltwasserringraum und einen Warmwasserringraum aufweist und wobei der Steuer-und Regelkolben (6) zur Temperatursteuerung relativ zum Temperatursteuer- und -regelblock in eine temperaturbestimmende Ausgangslage einstellbar und zur Temperaturregelung mittels des Regelelements (7) steuerbar ist, **dadurch gekennzeichnet, daß** der Temperatursteuer- und -regelblock (5) - zwischen dem Kaltwasserringraum (15) und dem Warmwasserringraum (16) - einen Steuer- und Anschlagbund (17) aufweist, der Steuer- und Regelkolben (6) hülsenförmig ausgeführt ist sowie eine Kaltwassersteuerkante (18) und - mit Abstand (A) zu der Kaltwassersteuerkante (18) - eine Warmwassersteuerkante (19) aufweist, daß der Steuer- und Anschlagbund (17) eine Breite (B) hat, die geringer ist als der Abstand (A) zwischen der Kaltwassersteuerkante (18) und der Warmwassersteuerkante (19), und in den Zwischenraum zwischen der Kaltwassersteuerkante (18) und der Warmwassersteuerkante (19) ragt, daß der Steuer- und Regelkolben (6) mindestens eine in Abhängigkeit von der Stellung des Steuer-und Regelkolbens (6) relativ zum Temperatursteuer- und -regelblock (5) mit dem Kaltwasserringraum (15) und/oder mit dem Warmwasserringraum (16) kommunizierende, in den Innenraum des Steuer- und Regelkolbens (6) mündende Durchtrittsöffnung (32) aufweist und daß, vorzugsweise, das Regelelement (7) zumindest teilweise innerhalb des Steuer- und Regelkolbens (6) angeordnet ist und an einem Ende des Steuer- und Regelkolbens (6) angreift.

2. Sanitäre Mischbatterie nach Anspruch 1, dadurch gekennzeichnet, daß zwischen dem Temperatursteuer- und -regelblock (5) und dem Steuer- und Regelkolben (6) nur schwach oder nicht vorgespannte 0-Ringe (21) vorgesehen sind und daß der Temperatursteuer- und -regelblock (5) zwei 0-Ringe (21) aufnehmende Nuten (22) aufweist.

3. Sanitäre Mischbatterie nach Anspruch 1 oder 2, dadurch gekennzeichnet, daß der Steuer- und Regelkolben (6) aus einem ersten Kolbenteil (23), einem zweiten Kolbenteil (24) und ggf. einem die beiden Kolbenteile (23, 24) verbindenden Adapter (28) besteht.

4. Sanitäre Mischbatterie nach Anspruch 3, dadurch gekennzeichnet, daß das erste Kolbenteil (23) ein in das zweite Kolbenteil (24) hineinragendes Verbindungsteil (25) mit einem Außengewinde (26) aufweist, das zweite Kolbenteil (24) mit einem Innengewinde (27) versehen ist und die beiden Kolbenteile (23, 24) miteinander verschraubt sind.

5. Sanitäre Mischbatterie nach Anspruch 3, dadurch gekennzeichnet, daß der Adapter (28) einerseits durch eine Steck-, Klemm- oder Schnappverbindung (29) mit dem ersten Kolbenteil (23) verbunden ist, andererseits ein Außengewinde (30) aufweist und mit dem Außengewinde (30) in das zweite Kolbenteil (24) hineinragt, das zweite Kolbenteil (24) mit einem Innengewinde (31) versehen ist und der Adapter (28) und das zweite Kolbenteil (24) miteinander verschraubt sind.

6. Sanitäre Mischbatterie nach einem der Ansprüche 1 bis 5, dadurch gekennzeichnet, daß im Innenraum des Steuer- und Regelkolbens (6) mindestens eine vorzugsweise an der Innenwand anliegende Siebhülse (33) vorgesehen ist.

7. Sanitäre Mischbatterie nach einem der Ansprüche 1 bis 6, dadurch gekennzeichnet, daß eine den Temperatursteuer- und -regelblock (6) übergreifende Steuerhülse (34) vorgesehen ist sowie der Steuer- und Regelkolben (6) und das Regelelement (7) in der Steuerhülse (34) eingespannt sind.

8. Sanitäre Mischbatterie nach Anspruch 7, dadurch gekennzeichnet, daß der Steuer- und Regelkolben (6) über eine Rückstellfeder (35) an einem ersten Abstützflansch (36) der Steuerhülse (34) und das Regelelement (7) an einem zweiten Abstützflansch (37) der Steuerhülse (34) abgestützt sind.

9. Sanitäre Mischbatterie nach Anspruch 8, dadurch gekennzeichnet, daß die Rückstellfeder als Tellerfeder ausgeführt ist.

10. Sanitäre Mischbatterie nach Anspruch 8, dadurch gekennzeichnet, daß die Rückstellfeder (35) als Schraubendruckfeder ausgeführt ist und das der Rückstellfeder (35) zugewandte Ende des Steuer- und Regelkolbens (6) eine das dem Steuer- und Regelkolben (6) zugewandte Ende der Rückstellfeder (35) aufnehmende Ringnut (38) aufweist.

11. Sanitäre Mischbatterie nach einem der Ansprüche 8 bis 10, dadurch gekennzeichnet, daß zwischen dem dem zweiten Abstützflansch (37) der Steuerhülse (34) zugewandten Ende des Regelelements (7) und dem zweiten Abstützflansch (37) der Steuerhülse (34) eine Restwegeinheit (39) vorgesehen ist.

12. Sanitäre Mischbatterie nach Anspruch 11, dadurch gekennzeichnet, daß die Restwegeinheit (39) eine federbelastete Bewegung des dem zweiten Abstützflansch (37) der Steuerhülse (34) zugewandten Endes des Regelelements (7) relativ zum zweiten Abstützflansch (37) der Steuerhülse (34) zuläßt.

13. Sanitäre Mischbatterie nach Anspruch 12, dadurch gekennzeichnet, daß die Restwegeinheit (39) aus einer mit dem zweiten Abstützflansch (37) der Steuerhülse (34) verbundenen Außenhülse (40), einer eine Abstützfläche (41) für das Regelelement (7) aufweisenden Innenhülse (42) und einer zwischen einem Innenbund (43) der Außenhülse (40) und einem Außenbund (44) der Innenhülse (42) vorgesehenen Restwegfeder (45) besteht.

14. Sanitäre Mischbatterie nach Anspruch 13, dadurch gekennzeichnet, daß der zweite Abstützflansch (37) der Steuerhülse (34) eine der Aufnahme der Restwegeinheit (39) dienende Gewindebohrung (46) aufweist, die Außenhülse (40) der Restwegeinheit (39) mit einem Außengewinde (47) versehen ist und die Restwegeinheit (39) mit dem Außengewinde (47) der Außenhülse (40) in die Gewindebohrung (46) des zweiten Abstützflansches (37) der Steuerhülse (34) eingeschraubt ist.

15. Sanitäre Mischbatterie nach Anspruch 13 oder 14, dadurch gekennzeichnet, daß die Außenhülse der Restwegeinheit mindestens einen nach innen ragenden Rastvorsprung aufweist und die Innenhülse mit mindestens einem ihren Außenbund teilenden Federschlitz versehen ist.

16. Sanitäre Mischbatterie nach einem der Ansprüche 7 bis 15, dadurch gekennzeichnet,daß die Steuerhülse (34) einerseits mit dem Temperatursteuer- und -regelblock (5) und andererseits relativ zum Temperatursteuer- und -regel-block (5) verschiebbar ist.

17. Sanitäre Mischbatterie nach Anspruch 16, dadurch gekennzeichnet, daß der Temperatursteuer- und -regelblock (5) mit einem Steuerkopf (48) versehen ist, in dem Steuerkopf (48) ein Exzenter (49) drehbar gelagert ist, die Steuerhülse (34) eine Steuerausnehmung (50) aufweist und die Steuerhülse (34) durch ein Zusammenwirken von Exzenter (49) und Steuerausnehmung (50) einerseits mit dem Temperatursteuer- und -regelblock (5) und andererseits relativ zum Temperatursteuer- und -regelblock (5) verschiebbar ist.

18. Sanitäre Mischbatterie nachu Anspruch 17, dadurch gekennzeichnet, daß der Exzenter (49) eine Steuerausnehmung (51) aufweist und der mit dem Betätigungshebel verbundene Steuerhebel (8) in die Steuerausnehmung (51) des Exzenters (49) eingreift.

19. Sanitäre Mischbatterie nach einem der Ansprüche 1 bis 18, dadurch gekennzeichnet, daß die Ventilscheibe (4) über eine Verbindungsplatte (52) mit dem Temperatursteuer- und -regelblock (5) verbunden ist.

20. Sanitäre Mischbatterie nach Anspruch 19, dadurch gekennzeichnet, daß die Verbindungsplatte (52) die Ventilscheibe (4) einerseits und den Temperatursteuer- und -regelblock (5) andererseits übergreifende Vorsprünge (53) aufweist.

21. Sanitäre Mischbatterie nach einem der Ansprüche 1 bis 18, dadurch gekennzeichnet, daß die Ventilscheibe und der Temperatursteuer- und -regelblock einstückig ausgeführt sind.

22. Sanitäre Mischbatterie nach einem der Ansprüche 1 bis 21, dadurch gekennzeichnet, daß die in der Ventilscheibe (4) verwirklichten Durchtrittsöffnungen (11, 12) an der der Ventilsitzscheibe (3) zugewandten Seite mit einer Erweiterung (54) versehen sind.

23. Sanitäre Mischbatterie nach einem der Ansprüche 1 bis 22, dadurch gekennzeichnet, daß in den in der Ventilscheibe (4) verwirklichten Durchtrittsöffnungen (11, 12) an der der Ventilsitzscheibe (3) zugewandten Seite ein Siebeinsatz (55) vorgesehen ist.

## Claims

1. A sanitary mixer tap with thermostatic regulation, having a cold water supply (1), a hot water supply (2) and a mixed water outflow, having a fixed valve seat disc (3), having a valve disc (4) which is displaceable on the valve seat disc (3) for quantitative control, having a temperature control and regulating block (5) which cooperates with the valve disc for temperature control and regulation, having a control and regulating piston (6) provided in the temperature control and regulating block, having a temperature-dependent regulating element (7) which cooperates with the control and regulating piston, having an operating lever and having a control lever (8) attached to the operating lever, wherein the valve seat disc (3) has a cold water inlet opening (9) connected to the cold water supply (1) and a hot water inlet opening (10) connected to the hot water supply, and wherein the valve disc (4) has passageway openings (11, 12) communicating with the cold water inlet opening (9) of the valve seat disc and with the hot water inlet opening (10) of the valve seat disc (3), wherein the temperature control and regulating block (5) has cold and hot water inlet openings (13, 14) communicating with the passageway openings (11, 12) of the valve disc (4) and has a cold water annular space and a hot water annular space, and wherein the control and regulating piston (6) can be set in a temperature-determining initial position in relation to the temperature control and regulating block for temperature control and can be controlled by means of the regulating element (7) for temperature regulation, characterised in that the temperature control and regulating block (5) has a control and stop collar (17) between the cold water annular space (15) and the hot water annular space (16), the control and regulating piston (6) is of sleeve-shaped construction and has a cold water control edge (18) and a hot water control edge (19) at a distance (A) from the cold water control edge (18), that the control and stop collar (17) has a width (B) which is less than the distance (A) between the cold water control edge (18) and the hot water control edge (19) and projects into the intermediate space between the cold water control edge (18) and the hot water control edge (19), that the control and regulating piston (6) has at least one passageway opening (32), which leads into the interior space of the control and regulating piston (6) and communicates with the cold water annular space (15) and/or with the hot water annular space (16) depending on the position of the control and regulating piston (6) in relation to the temperature control and regulating block (5), and that the regulating element (7) is preferably at least partially disposed inside the control and regulating piston (6) and acts on one end of the control and regulating piston (6).

2. A sanitary mixer tap according to claim 1, characterised in that O-rings (21) which are not pre-stressed or are only slightly pre-stressed are provided between the temperature control and regulating block (5) and the control and regulating piston (6), and that the temperature control and regulating block (5) has two grooves (22) which receive O-rings (21).

3. A sanitary mixer tap according to claim 1 or 2, characterised in that the control and regulating piston (6) consists of a first piston part (23), a second piston part (24) and optionally of an adaptor (28) which connects the two piston parts (23, 24).

4. A sanitary mixer tap according to claim 3, characterised in that the first piston part (23) has a connecting part (25) with an external thread (26), which projects into the second piston part (24), the second piston part (24) is provided with an internal thread (27) and the two piston parts (23, 24) are screwed to each other.

5. A sanitary mixer tap according to claim 3, characterised in that the adaptor (28) is firstly connected to the first piston part (23) by a plug-in, clamped, or snap-in connection (29), secondly has an external thread (30) and the external thread (30) projects into the second piston part (24), the second piston part (24) is provided with an internal thread (31) and the adaptor (28) and the second piston part (24) are screwed to each other.

6. A sanitary mixer tap according to any one of Claims 1 to 5, characterised in that at least one gauze sleeve (33) is provided in the interior space of the control and regulating piston (6) and is preferably seated against the inner wall.

7. A sanitary mixer tap according to any one of claims 1 to 6, characterised in that a control sleeve (34) is provided which fits over the temperature control and regulating block (5) and that the control and regulating piston (6) and the regulating element (7) are clamped in the control sleeve (34).

8. A sanitary mixer tap according to claim 7, characterised in that the control and regulating piston (6) is supported via a return spring (35) on a first supporting flange (36) of the control sleeve (34) and the control element (7) is supported on a second supporting flange (37) of the control sleeve (34).

9. A sanitary mixer tap according to claim 8, characterised in that the return spring is constructed as a disc spring.

10. A sanitary mixer tap according to claim 8, characterised in that the return spring (35) is designed as a coil compression spring and that the end of the control and regulating piston (6) facing the return spring (35) has an annular groove (38) which receives the end of the return spring (35) facing the control and regulating piston (6).

11. A sanitary mixer tap according to any one of claims 8 to 10, characterised in that a residual travel unit (39) is provided between the end of the regulating element (7) facing the second supporting flange (37) of the control sleeve (34) and the second supporting flange (37) of the control sleeve (34).

12. A sanitary mixer tap according to claim 11, characterised in that the residual travel unit (39) permits a spring-loaded movement of the end of the regulating unit (7) facing the second supporting flange (37) of the control sleeve (34) in relation to the second supporting flange (37) of the control sleeve (34).

13. A sanitary mixer tap according to claim 12, characterised in that the residual travel unit (39) consists of an outer sleeve (40) attached to the second supporting flange (37) of the control sleeve (34), an inner sleeve (42) which has a supporting flange (41) for the regulating element (7), and a residual travel spring (45) which is provided between an inner collar (43) of the outer sleeve (40) and an outer collar (44) of the inner sleeve (42).

14. A sanitary mixer tap according to claim 13, characterised in that the second supporting flange (37) of the control sleeve (34) has a tapped hole (46) which serves to receive the residual travel unit (39), the outer sleeve (40) of the residual travel unit (39) is provided with an external thread (47), and the external thread (47) of the outer sleeve (40) of the residual travel unit (39) is screwed into the tapped hole (46) of the second supporting flange (37) of the control sleeve (34).

15. A sanitary mixer tap according to claim 13 or 14, characterised in that the outer sleeve of the residual travel unit has at least one inwardly projecting locking projection and the inner sleeve is provided with at least one spring slit which divides its outer sleeve.

16. A sanitary mixer tap according to any one of claims 7 to 15, characterised in that the control sleeve (34) is firstly displaceable with the temperature control and regulating block (5) and is secondly displaceable in relation to the temperature control and regulating block (5).

17. A sanitary mixer tap according to claim 16, characterised in that the temperature control and regulating block (5) is provided with a control head (48), an eccentric (49) is rotatably mounted in the control head (48), the control sleeve (34) has a control recess (50) and the control sleeve (34) is firstly displaceable with the temperature control and regulating block (5) and is secondly displaceable in relation to the temperature control and regulating block (5) by means of the cooperation of the eccentric (49) and the control recess (50).

18. A sanitary mixer tap according to claim 17, characterised in that the eccentric (49) has a control recess (51) and the control lever (8) attached to the operating lever engages in the control recess (51) of the eccentric (49).

19. A sanitary mixer tap according to any one of claims 1 to 18, characterised in that the valve disc (4) is connected to the temperature control and regulating block (5) via a connection plate (52).

20. A sanitary mixer tap according to claim 19, characterised in that the connection plate (52) has projections (53) which fit over the valve disc (4) on one side and the temperature control and regulating block (5) on the other side.

21. A sanitary mixer tap according to any one of claims 1 to 18, characterised in that the valve disc and the temperature control and regulating block are of one-piece construction.

22. A sanitary mixer tap according to any one of claims 1 to 21, characterised in that the passageway openings (11, 12) formed in the valve disc (4) are provided with an enlargement (54) on their sides facing the valve seat disc (3).

23. A sanitary mixer tap according to any one of claims 1 to 22, characterised in that a gauze insert (55) is provided in the passageway openings (11, 12) formed in the valve disc (4), on the side facing the valve seat disc (3).

## Revendications

1. Mélangeur d'évier à commande thermostatique pour des installations sanitaires, comprenant une amenée d'eau froide (1), une amenée d'eau chaude (2) et une sortie pour l'eau mixte, un disque de siège de soupape fixe (3), un disque de soupape (4) apte à se déplacer sur le disque de siège de soupape (3) pour la commande du débit, un bloc (5) de commande et de réglage de la température coopérant avec le disque de soupape pour la commande et le réglage de la température, une tige de commande et de réglage (6) prévue dans le bloc de commande et de réglage de la température, un élément de réglage (7) dépendant de la température coopérant avec la tige de commande et de réglage, un levier de manoeuvre et un levier de commande (8) relié au levier de manoeuvre, le disque de siège de soupape (3) présentant une ouverture d'entrée (9) pour l'eau froide se trouvant en liaison avec l'amenée d'eau froide (1) et une ouverture d'entrée (10) pour l'eau chaude se trouvant en liaison avec l'amenée d'eau chaude (2), et le disque de soupape (4) présentant des ouvertures de pénétration (11, 12) communiquant avec l'ouverture d'entrée (9) du disque de siège de soupape pour l'eau froide et l'ouverture d'entrée (10) du disque de siège de soupape (3) pour l'eau chaude, le bloc (5) de commande et de réglage de la température présentant des ouvertures d'entrée (13, 14) pour l'eau froide et pour l'eau chaude communiquant avec les ouvertures de pénétration (11, 12) du disque de soupape (4), ainsi qu'un espace annulaire pour l'eau froide et un espace annulaire pour l'eau chaude, et dans lequel la tige de commande et de réglage (6) pour la commande de la température peut être réglée à des fins de commande de température par rapport au bloc de commande et de réglage de la température dans une position de départ déterminant la température et peut être commandée pour le réglage de la température au moyen de l'élément de réglage (7) , caractérisé en ce que le bloc (5) de commande et de réglage de la température - entre l'espace annulaire (15) pour l'eau froide et l'espace annulaire (16) pour l'eau chaude - présente un collet de commande et de butée (17), la tige de commande et de réglage (6) est réalisée en forme de manchon et présente une arête de commande (18) pour l'eau froide et - à une distance A de l'arête de commande (18) pour l'eau froide - une arête de commande (19) pour l'eau chaude, en ce que le collet de commande et de butée (17) possède une largeur (B) qui est inférieure à la distance (A) s'étendant entre l'arête de commande (18) pour l'eau froide et l'arête de commande (19) pour l'eau chaude, et fait saillie dans l'espace intermédiaire ménagé entre l'arête de commande (18) pour l'eau froide et l'arête de commande (19) pour l'eau chaude, en ce que la tige de commande et de réglage (6) présente au moins une ouverture de pénétration (32) aboutissant dans l'espace interne de la tige de commande et de réglage (6) et communiquant, en fonction de la position de la tige de commande et de réglage (6) par rapport au bloc (5) de commande et de réglage de la température, avec l'espace annulaire (15) pour l'eau froide et/ou avec l'espace annulaire (16) pour l'eau chaude, et en ce que, de préférence, l'élément de réglage (7) est disposé au moins partiellement à l'intérieur de la tige de commande et de réglage (6) et vient s'appliquer contre une extrémité de la tige de commande et de réglage (6).

2. Mélangeur d'évier pour des installations sanitaires selon la revendication 1, caractérisé en ce que, entre le bloc (5) de commande et de réglage de la température et la tige de commande et de réglage (6), on prévoit des joints toriques (21) soumis à une précontrainte seulement minime, voire exempts de précontrainte, et en ce que le bloc (5) de commande et de réglage de la température présente deux rainures (22) dans lesquelles viennent se loger des joints toriques (21).

3. Mélangeur d'évier pour des installations sanitaires selon la revendication 1 ou 2, caractérisé en ce que la tige de commande et de réglage (6) est constituée par une première partie de tige (23), par une seconde partie de tige (24) et éventuellement par un adaptateur (28) reliant les deux parties de tige (23, 24).

4. Mélangeur d'évier pour des installations sanitaires selon la revendication 3, caractérisé en ce que la première partie de tige (23) présente un élément de liaison (25) muni d'un filet de vis externe (26), faisant saillie à l'intérieur de la seconde partie de tige (24), la seconde partie de tige (24) est munie d'un filet de vis interne (27) et les deux parties de tige (23, 24) sont vissées l'une à l'autre.

5. Mélangeur d'évier pour des installations sanitaires selon la revendication 3, caractérisé en ce que l'adaptateur (28) est relié d'une part à l'aide d'une liaison d'enfichage, de serrage ou d'encliquetage (29) avec la première partie de tige (23), d'autre part présente un filet de vis externe (30) et fait saillie avec le filet de vis externe (30) à l'intérieur de la seconde partie de tige (24), la seconde partie de tige (24) est munie d'un filet de vis interne (31), l'adaptateur (28) et la seconde partie de tige (24) étant vissés l'un à l'autre.

6. Mélangeur d'évier pour des installations sanitaires selon l'une quelconque des revendications 1 à 5, caractérisé en ce que, dans l'espace interne de la tige de commande et de réglage (6), on prévoit au moins un manchon filtrant (33) qui s'appuie de préférence contre la paroi interne.

7. Mélangeur d'évier pour des installations sanitaires selon l'une quelconque des revendications 1 à 6, caractérisé en ce qu'on prévoit un manchon de commande (34) enserrant le bloc (5) de commande et de réglage de la température, la tige de commande et de réglage (6) et l'élément de réglage (7) étant encastrés dans le manchon de commande (34).

8. Mélangeur d'évier pour des installations sanitaires selon la revendication 7, caractérisé en ce que la tige de commande et de réglage (6) vient s'appuyer, via un ressort de rappel (35), contre une première bride d'appui (36) du manchon de commande (34) et l'élément de réglage (7) s'appuie contre une seconde bride d'appui (37) du manchon de commande (34).

9. Mélangeur d'évier pour des installations sanitaires selon la revendication 8, caractérisé en ce que le ressort de rappel est réalisé sous la forme d'un ressort à disques.

10. Mélangeur d'évier pour des installations sanitaires selon la revendication 8, caractérisé en ce que le ressort de rappel (35) est réalisé sous forme d'un ressort à boudin, et l'extrémité de la tige de commande et de réglage (6) tournée vers le ressort de rappel (35) présente une rainure annulaire (38) dans laquelle vient se loger l'extrémité du ressort de rappel (35) tournée vers la tige de commande et de réglage (6).

11. Mélangeur d'évier pour des installations sanitaires selon l'une quelconque des revendications 8 à 10, caractérisé en ce que, entre l'extrémité de l'élément de réglage (7) tournée vers la seconde bride d'appui (37) du manchon de commande (34) et la seconde bride d'appui (37) du manchon de commande (34), on prévoit une unité de voie résiduelle (39).

12. Mélangeur d'évier pour des installations sanitaires selon la revendication 11, caractérisé en ce que l'unité de voie résiduelle (39) permet un mouvement chargé par un ressort de l'extrémité de l'élément de réglage (7) tournée vers la seconde bride d'appui (37) du manchon de commande (34) par rapport à la seconde bride d'appui (37) du manchon de commande (34).

13. Mélangeur d'évier pour des installations sanitaires selon la revendication 12, caractérisé en ce que l'unité de voie résiduelle (39) est constituée par un manchon externe (40) relié à la seconde bride d'appui (37) du manchon de commande (34), par un manchon interne (42) présentant une surface d'appui (41) pour l'élément de réglage (7) et par un ressort (45) de la voie résiduelle, prévu entre un collet interne (43) du manchon externe (40) et un collet externe (44) du manchon interne (42).

14. Mélangeur d'évier pour des installations sanitaires selon la revendication 13, caractérisé en ce que la seconde bride d'appui (37) du manchon de commande (34) présente un alésage taraudé (46) servant au logement de l'unité de voie résiduelle (39), le manchon externe (40) de l'unité de voie résiduelle (39) est muni d'un filet de vis externe (47) et l'unité de voie résiduelle (39) est vissée avec le filet de vis externe (47) du manchon externe (40) dans l'alésage taraudé (46) de la seconde bride d'appui (37) du manchon de commande (34).

15. Mélangeur d'évier pour des installations sanitaires selon la revendication 13 ou 14, caractérisé en ce que le manchon externe de l'unité de voie résiduelle présente au moins une saillie d'encliquetage saillante vers l'intérieur et le manchon interne est muni d'au moins une fente à ressort séparant son collet externe.

16. Mélangeur d'évier pour des installations sanitaires selon l'une quelconque des revendications 7 à 15, caractérisé en ce que le manchon de commande (34) peut coulisser d'une part avec le bloc (5) de commande et de réglage de la température, et d'autre part, par rapport au bloc (5) de commande et de réglage de la température.

17. Mélangeur d'évier pour des installations sanitaires selon la revendication 16, caractérisé en ce que le bloc (5) de commande et de réglage de la température est muni d'une tête de commande (48), un excentrique (49) est monté en rotation dans la tête de commande (48), le manchon de commande (34) présente un évidement de commande (50) et le manchon de commande (34) peut coulisser grâce à la coopération de l'excentrique (49) et de l'évidement de commande (50), d'une part avec le bloc (5) de commande et de réglage de la température, et d'autre part, par rapport au bloc (5) de commande et de réglage de la température.

18. Mélangeur d'évier pour des installations sanitaires selon la revendication 17, caractérisé en ce que l'excentrique (49) présente un évidement de commande (51) et le levier de commande (8) relié au levier de manoeuvre vient s'engrener dans l'évidement de commande (51) de l'excentrique (49).

19. Mélangeur d'évier pour des installations sanitaires selon l'une quelconque des revendications 1 à 18, caractérisé en ce que le disque de soupape (4) est relié, via une plaque de liaison (52), au bloc (5) de commande et de réglage de la température.

20. Mélangeur d'évier pour des installations sanitaires selon la revendication 19, caractérisé en ce que la plaque de liaison (52) présente des saillies (53) enserrant d'une part le disque de soupape (4) et d'autre part, le bloc (5) de commande et de réglage de la température.

21. Mélangeur d'évier pour des installations sanitaires selon l'une quelconque des revendications 1 à 18, caractérisé en ce que le disque de soupape et le bloc de commande et de réglage de la température sont réalisés en une seule pièce.

22. Mélangeur d'évier pour des installations sanitaires selon l'une quelconque des revendications 1 à 21, caractérisé en ce que les ouvertures de pénétration (11, 12) réalisées dans le disque de soupape (4) sont munies, sur le côté tourné vers le disque de siège de soupape (3), d'un élargissement (54) .

23. Mélangeur d'évier pour des installations sanitaires selon l'une quelconque des revendications 1 à 22, caractérisé en ce que, dans les ouvertures de pénétration (11, 12) réalisées dans le disque de soupape (4), on prévoit une pièce rapportée filtrante (75) sur le côté tourné vers le disque de siège de soupape (3).
